# EUROPÄISCHE PATENTANMELDUNG

(11) **EP 3 932 925 A1**
(43) Veröffentlichungstag der Anmeldung: **05.01.2022**
(21) Anmeldenummer: 20183466.0
(22) Anmeldetag: 01.07.2020
(51) Int. Cl.: C07F 7/30, C01B 33/107, C01G 17/04, C23C 16/22

(54) **NEUE PERCHLORIERTE DISILENE UND GERMASILENE SOWIE NEOPENTATETRELANE, VERFAHREN ZU DEREN HERSTELLUNG UND DEREN VERWENDUNG**

(71) Anmelder: Evonik Operations GmbH, 45128 Essen (DE)
(72) Erfinder: WAGNER, Matthias, 61194 Niddatal (DE); KUNKEL, Chantal Isabell, 60437 Frankfurt (DE); LERNER, Hans-Wolfram, 61440 Oberursel (DE)
(74) Vertreter: Evonik Patent Association

(57) **Zusammenfassung**

Gegenstand der Erfindung sind Disilene, Germasilene und Neopentatetrelane, ein Verfahren zur deren Herstellung sowie deren Verwendung.

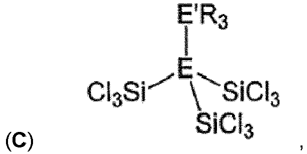

## Beschreibung

Die vorliegende Erfindung betrifft neue Disilene, Germasilene und Neopentatetrelane, ein Verfahren zur deren Herstellung sowie deren Verwendung.

Über Germasilene und Neopentatetrelane ist bis heute praktisch nichts bekannt. So ist man seitens der Grundlagenforschung bestrebt, neue Verbindungen aufzufinden und neue Herstellungswege zu suchen, insbesondere auch mit Hinblick auf mögliche industrielle sowie ggf. verbesserbare Anwendungen.

Die Patentanmeldung EP 3 410 466 A1 offenbart Trichlorsilyltrichlorgerman und Chlorsilylarylgermane, die in gelöster Form und durch Umsetzung eines Arylchlorgermans mit Hexachlordisilan in Gegenwart eines Katalysators gewonnen werden.

Triphenylgermylsilan wird in EP 3 409 645 A1 offenbart und hergestellt, indem Trichlorsilyltriphenylgerman und AlCl₃ in einem Lösungsmittel gelöst und unter Zusatz eines Hydrids reduziert wird.

EP 3 409 678 A1 stellt verschiedene Halogengermanide vor, die durch Umsetzung von GeCl₄ mit Hexachlordisilan gewonnen werden.

Der vorliegenden Erfindung lag die Aufgabe zugrunde, neue Silicium-Germanium Verbindungen sowie ein Verfahren zu deren Herstellung bereit zu stellen.

Die Aufgabe wurde gelöst, indem Tris(trichlorsilyl)tetrelide mit Aluminiumtrichlorid in Gegenwart elektrophiler Substanzen umgesetzt wurden. Hierbei wurden Verbindungen einer neuen Substanzklasse dargestellt.

Gegenstand der Erfindung ist die Verbindung Neopentatetrelan der allgemeinen Formel **C** 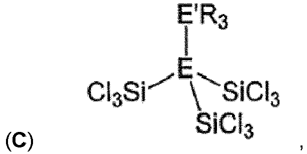 wobei paarweise unabhängig voneinander E für Si oder Ge, E' für C, Si oder Ge, und R für Cl, Me, Et oder Ph stehen.

Zur Darstellung wurde eine Syntheseroute ausgehend von preisgünstigen Edukten gefunden.

Gegenstand der Erfindung ist daher ebenfalls ein Verfahren zur Herstellung des erfindungsgemäßen Neopentatetrelans **C,** indem man
(a) ein Salz [X₄N]- oder [X₄P]-Tris(trichlorsilyl)tetrelid, wobei der Rest X ausgewählt ist aus Me, Et, *i*Pr, *n*Bu oder Ph,
   das Tris(trichlorsilyl)tetrelid mit der allgemeinen Formel **A⁻** 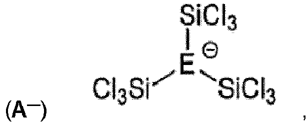 mit E = Si oder Ge,
in einem Lösungsmittel löst, und anschließend entweder die Schritte b und c, oder den Schritt d ausführt:
(b) das nach Schritt a gelöste Tris(trichlorsilyl)tetrelid in Gegenwart einer Lewis-Säure umsetzen, wobei ein Disilen oder Germasilen mit der allgemeinen Formel **B** 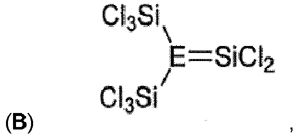 mit E = Si oder Ge erhalten wird, und
(c) das Disilen oder Germasilen **B** mit einem Tetrelchlorid R₃E'-Cl bei einer Temperatur von - 80 °C bis 40 °C umsetzen, mit E' = C, Si oder Ge, und mit R = Cl, Me, Et oder Ph, wobei das Neopentatetrelan **C** erhalten wird,
   oder
(d) das nach Schritt a gelöste Tris(trichlorsilyl)tetrelid bei einer Temperatur
   von - 80 °C bis 40 °C in eine Suspension einbringen, die eine Lewis-Säure, ein Tetrelchlorid R₃E'-Cl mit E' = C, Si oder Ge, und mit R = Cl, Me, Et oder Ph,
   und ein Lösungsmittel enthält, wobei das Neopentatetrelan **C** erhalten wird.

Das erfindungsgemäße Verfahren hat den Vorteil, dass bereits durch einfache Veränderung des elektrophilen Substrats die Zusammensetzung der erhaltenen Neopentatetrelane über einen weiten Bereich variiert werden kann. Dadurch lässt sich eine Vielzahl von Derivaten mit maßgeschneiderten Eigenschaften für die Produktion von Halbleitermaterialien darstellen. Insbesondere ist das Si/Ge - Verhältnis in dem erfindungsgemäßen Verfahren definiert einstellbar und erzielt somit Neopentatetrelane **C** mit einer für die Herstellung von Halbleitermaterialien herausragenden Bedeutung.

Daher ist ebenfalls Gegenstand der Erfindung die Verwendung des erfindungsgemäßen oder erfindungsgemäß erhaltenen Neopentatetrelanes **C** für die Erzeugung von GeSi-Schichten.

Die Erfindung wird im Folgenden näher erläutert.

In dem erfindungsgemäßen Verfahren kann es vorteilhaft sein, die Temperatur während der Umsetzungsreaktion im Bereich von - 100 °C bis 40 °C einzustellen.
Im Schritt d des erfindungsgemäßen Verfahrens findet die Umsetzungsreaktion für den Fall, dass E = Si gewählt wird, bereits bei einer Temperatur von - 78 °C statt.

Die Verbindung der Struktur **B** wird in dem Falle, dass E = Ge ist, im Rahmen der Erfindung auch "Germasilen" genannt.

Die Herstellung einer Suspension, die die im Schritt d aufgeführten Komponenten enthält, ist dem Fachmann bekannt.

Die nach Schritt a erhaltene Lösung wird in die Suspension vorzugsweise getropft, falls Schritt d ausgeführt wird.

Das erfindungsgemäße Verfahren gemäß der Schritte a, b und c hat den weiteren Vorteil, dass das Di- oder Germasilen **B** gespeichert werden kann, indem man im Schritt b das nach Schritt a gelöste Tris(trichlorsilyl)tetrelid in Gegenwart einer Lewis-Säure zusammen mit zumindest einem weiteren Reagenz umsetzt und das Verfahren nach Schritt b abbricht.
Als zusätzliches Reagenz wird vorzugsweise Anthracen oder ein Anthracen-Derivat, vorzugsweise 2,7-Di-tertbutyl-anthracen, eingesetzt.

Somit sind gleichfalls Gegenstand der Erfindung Verbindungen der allgemeinen Formel **B,** hergestellt nach dem erfindungsgemäßen Verfahren, wobei im Schritt b des Verfahrens zusätzlich Anthracen oder ein Anthracen-Derivat eingesetzt wird und das Verfahren nach Schritt b und vor Schritt c abgebrochen wird.

Vorzugsweise kann **B** im abgeschmolzenen NMR-Rohr erhalten werden, indem E = Ge ausgewählt wird und **(A⁻),** AlCl₃ und Anthracen äquimolar eingewogen werden, C₆D₆ zugegeben wird und anschließend das NMR-Rohr unter Vakuum abgeschmolzen und sofort auf 120 °C erhitzt wird.

In dem erfindungsgemäßen Verfahren können die Schritte b und c, oder der Schritt d, vorzugsweise bei Raumtemperatur durchgeführt werden. Im Rahmen der Erfindung wird unter "Umgebungstemperatur" die Temperatur 20 °C verstanden.

Vorzugsweise kann in dem erfindungsgemäßen Verfahren im Schritt a und/oder im Schritt d als Lösungsmittel Dichlormethan, Benzol, C₆D₆, oder CD₂Cl₂ eingesetzt werden. Mit den vorzugsweise eingesetzten Lösungsmittel Dichlormethan oder CD₂Cl₂ kann das erfindungsgemäße Neopentatetrelan **C** erhalten werden. In dem Fall der erfindungsgemäßen Herstellung von (Cl₃Si)₃GeSiMe₃ kann vorzugsweise ebenfalls C₆D₆ eingesetzt werden.

In dem erfindungsgemäßen Verfahren kann vorzugsweise im Schritt a X = *n*Bu, eingesetzt werden.

Es kann vorteilhaft sein, im Schritt b oder d des erfindungsgemäßen Verfahrens als Lewis-Säure AlCl₃ einzusetzen.

Vorzugsweise kann man in dem erfindungsgemäßen Verfahren den Schritt d oder die Schritte b und c unter Durchmischung, bevorzugt unter Rühren, und über eine Dauer von insgesamt 1 bis 24 Stunden, vorzugsweise während insgesamt 12 h, und vorzugsweise unter Schutzgas, bevorzugt unter Stickstoff oder Argon,
durchführen, und anschließend
das Lösungsmittel entfernen, vorzugsweise in Sauerstoff freier trockener Umgebung, besonders bevorzugt in einer isolierten Umgebung,
weiterhin bevorzugt unter Normaldruck oder Druck im Bereich von 1 bis 500 hPa, besonders bevorzugt unter Normaldruck,
und das gebildete Neopentatetrelan **C** extrahieren, vorzugsweise mit n-Hexan, besonders bevorzugt mit siedendem *n*-Hexan.

Die nachfolgenden Beispiele erläutern die vorliegende Erfindung zusätzlich, ohne den Gegenstand zu beschränken. Unter "Umgebungsbedingungen" werden im Rahmen der Erfindung die Parameter der Standardatmosphäre bei 20 °C und einem Druck von 1013,25 hPa, dem sogenannten "Umgebungsdruck", verstanden.

### Analytische Methoden der Kristallstrukturbestimmung

Die Daten für alle Kristallstrukturen wurden bei 173 K mit einem STOE IPDS II Zweikreisdiffraktometer mit einer Genix Mikrofokusröhre mit Spiegeloptik unter Verwendung von Mo*K*_{α} Strahlung (*λ* = 0,71073 Å) gesammelt und mit dem frame scaling procedure des Programms *X-AREA* (Stoe & Cie, 2002) skaliert. Die Strukturen wurden mit direkten Methoden mit Hilfe des Programms *SHELXS* (Sheldrick, 2008) gelöst und gegen *F²* mit der full-matrix least-squares Technik verfeinert. Zellparameter wurden durch Verfeinerung gegen θ Werte der Reflexe mit *l*>6σ(*l*) bestimmt.

### Beispiel 1: Herstellung von Neopentatetrelan (C) mit E=Si, R=Cl und E'=Ge.

Eine Lösung aus 0,361 g oder 0,535 mmol entsprechend 1,0 eq [*n*Bu₄N][(Cl₃Si)₃Si] in 6 ml Lösungsmittel CH₂Cl₂ wurde zu einer Suspension aus 0,073 g oder 0,547 mmol entsprechend 1,0 eq AlCl₃ und 0,144 g oder 0,671 mmol entsprechend 1,3 eq GeCl₄ in 5 ml Lösungsmittel CH₂Cl₂ getropft, bis sich sämtlicher Feststoff gelöst hatte. Es wurde eine orangefarbene Lösung erhalten, die während 12 Stunden unter Umgebungsbedingungen gerührt wurde.

Das Lösungsmittel wurde unter Umgebungsdruck entfernt und der orangefarbene Feststoff mit 3 x 10 ml *n*-Hexan entfernt. Dabei erhielt man 0,193 g oder 0,316 mmol entsprechend einem Anteil von 59 % Neopentatetrelan (**C**) als farblose Flüssigkeit.

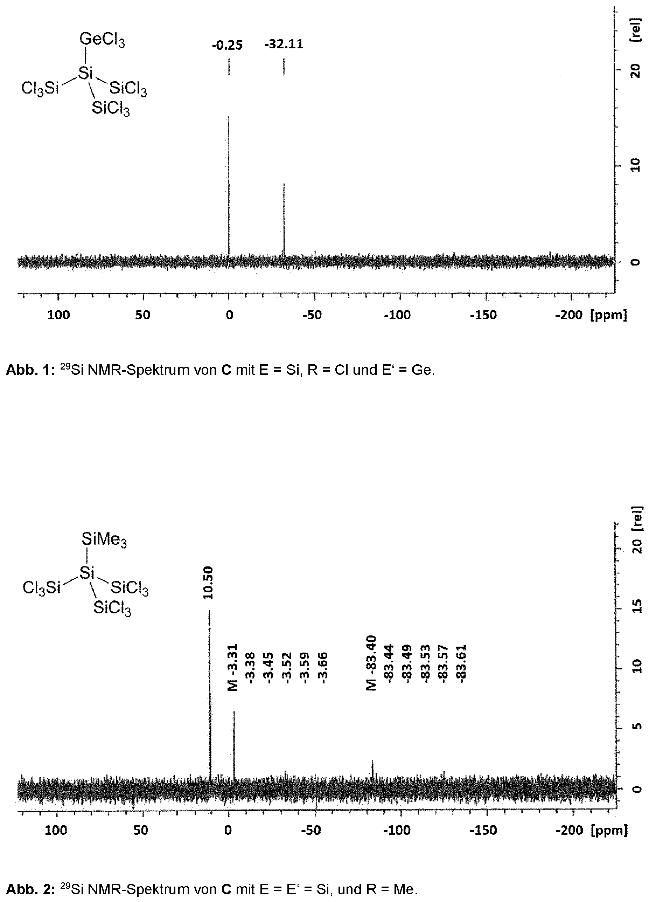

Das ²⁹Si NMR Spektrum dieses Beispiels ist in **Abb. 1** dargestellt.

Die Ergebnisse einer ¹H, ¹³C und ²⁹Si NMR-spektroskopischen Untersuchung:
**²⁹Si NMR (99,4 MHz, CD₂Cl₂):**
δ = - 0,25 ((Cl₃**Si**)₃SiGeCl₃), - 32,1 ppm ((Cl₃Si)₃**Si**GeCl₃)

### Hydrierung dieses Neopentatetrelans.

In einem abschmelzbaren NMR-Rohr wurden 0,55 ml einer 1 M Lösung von (*i*Bu₂)AlH in C₆H₁₂, welche 0,08 g oder 0,55 mmol und somit 14,0 eq (*i*Bu₂)AlH entsprechen, und 0,25 ml Et₂O zu 0,02 g oder 0,04 mmol entsprechend 1,0 eq Neopentatetrelan gegeben.

Nach 42 Stunden wurde die farblose Lösung NMR-spektroskopisch untersucht. Die Ergebnisse:
**¹H NMR (500,2 MHz, C₆H₁₂):** δ = 3,36 ppm (q, ⁴J_{H-H} = 7,0 Hz, (H₃Si)₃SiGeH₃);
**²⁹Si NMR (99,4 MHz, C₆H₁₂):** δ = -95,4 ppm (q, ¹J_{Si-H} = 200 Hz, (H₃Si)₃SiGeH₃);
**¹H/²⁹Si HSQC-NMR (500,2/99,4 MHz, C₆H₁₂):** δ = 3,36/-95,4 ppm;
**¹H/²⁹Si HMBC-NMR (500,2/99,4 MHz, C₆H₁₂):** δ = 3,36/-95,4, 3,36/-136,9 ppm.

### Beispiel 2: Herstellung von Neopentatetrelan (C) mit E=E'=Si, und R=Me.

Eine Lösung aus 0,238 g oder 0,353 mmol entsprechend 1,0 eq [*n*Bu₄N][(Cl₃Si)₃Si] in 3 ml Lösungsmittel CH₂Cl₂ wurde zu einer Suspension aus 0,049 g oder 0,367 mmol entsprechend 1,0 eq AlCl₃ und 0,073 g oder 0,672 mmol entsprechend 1,9 eq Me₃SiCl in 1 ml Lösungsmittel CH₂Cl₂ getropft, bis sich sämtlicher Feststoff gelöst hatte. Es wurde eine farblose Lösung erhalten.

Das Lösungsmittel wurde unter Rühren bei Umgebungsdruck entfernt und der farblose Feststoff mit 3 x 3 ml *n*-Hexan extrahiert. Dabei erhielt man 0,134 g oder 0,266 mmol entsprechend einem Anteil von 75 % Neopentatetrelan (**C**) als farblosen kristallinen Feststoff.

Das ²⁹Si NMR Spektrum dieses Beispiels ist in **Abb. 2** dargestellt.

Die Ergebnisse einer ¹H, ¹³C und ²⁹Si NMR-spektroskopischen Untersuchung:
**²⁹Si NMR (99,4 MHz, CD₂Cl₂):** δ = 10,5 ppm (s, (Cl₃**Si**)₃SiSiMe₃),
   -3,5 ppm (sext., ²J_{H,Si} = 7,0 Hz, (Cl₃Si)₃Si**Si**Me₃), -83,5 ppm (m, (Cl₃Si)**Si**SiMe₃).
**¹H NMR** (500,2 MHz, CD₂Cl₂): δ = 0,58 ppm;
**¹³C{¹H} NMR** (125,8 MHz, CD₂Cl₂): δ = 0,4 ppm;
**¹H/¹³C HSQC NMR** (500,2/125,8 MHz, CD₂Cl₂**)**: δ = 0,58/0,4 ppm;
**¹H/²⁹Si HMBC NMR** (500,2/99,4 MHz, CD₂Cl₂**)**: δ = 0,58/-3,5, 0,58/-83,5 ppm.

### Beispiel 3: Herstellung von Neopentatetrelan (C) mit E=Ge, E'=Si, und R=Me.

In einem abgeschmolzenem NMR-Rohr wurden 0,100 g oder 0,139 mmol entsprechend 1,0 eq [*n*Bu₄N][(Cl₃Si)₃Ge],
0,019 g oder 0,142 mmol entsprechend 1,0 eq AlCl₃ und
0,093 g oder 0,856 mmol entsprechend 6,2 eq Me₃SiCl
in 0,8 ml Lösungsmittel CD₂Cl₂ zur Reaktion gebracht, wodurch eine gelbe Lösung mit Feststoff mit oranger Farbe erhalten wurde.

Das Lösungsmittel wurde bei Umgebungsdruck entfernt und der Feststoff mit 3 x 3 ml siedendem n-Hexan isoliert. Dabei erhielt man 0,073 g oder 0,133 mmol entsprechend einem Anteil von 96 % Neopentatetrelan (**C**) mit E=Ge, E'=Si, und R=Me.

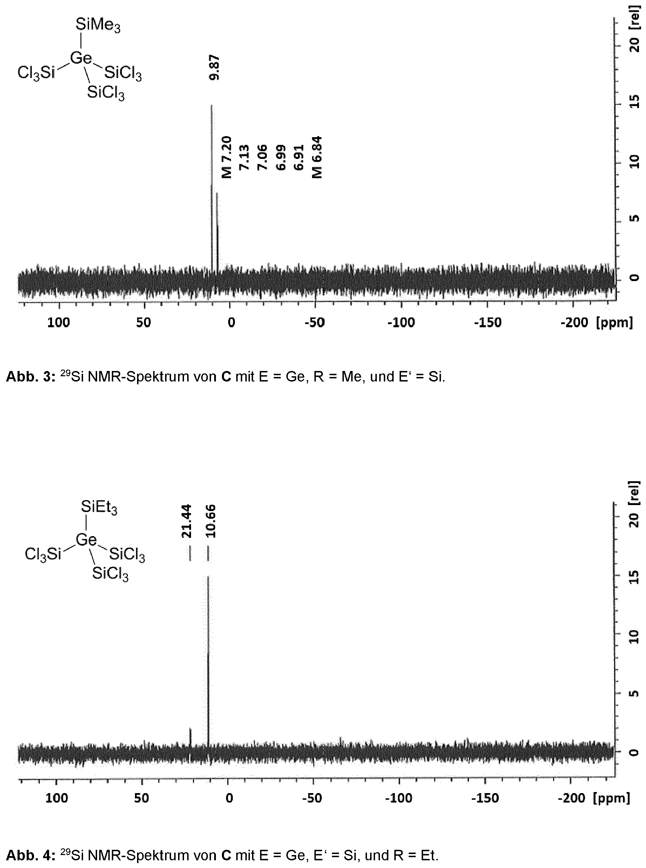

Das ²⁹Si NMR Spektrum dieses Beispiels ist in **Abb. 3** dargestellt.

Die Ergebnisse einer ¹H, ¹³C und ²⁹Si NMR-spektroskopischen Untersuchung:
**²⁹Si NMR (99,4 MHz, CD₂Cl₂):** δ = 9,9 ppm (s, (Cl₃**Si**)₃GeSiMe₃),
   7,2 ppm (sext., ²J_{H,Si} = 7,0 Hz, (Cl₃Si)₃Ge**Si**Me₃).
**¹H NMR** (500,2 MHz, CD₂Cl₂**)**: δ = 0,61 ppm;
**¹³C{¹H} NMR** (125,8 MHz, CD₂Cl₂**)**: δ = 1,2 ppm;
**¹H/¹³C HSQC NMR** (500,2/125,8 MHz, CD₂Cl₂**)**: δ = 0,61/1,2 ppm;
**¹H/²⁹Si HMBC NMR** (500,2/99,4 MHz, CD₂Cl₂**)**: δ = 0,61/7,0 ppm.

### Beispiel 4: Herstellung von Neopentatetrelan (C) mit E=Ge, E'=Si, und R=Et.

In einem abgeschmolzenem NMR-Rohr wurden 0,10 g oder 0,14 mmol entsprechend 1,0 eq [*n*Bu₄N][(Cl₃Si)₃Ge],
0,02 g oder 0,14 mmol entsprechend 1,0 eq AlCl₃ und
0,13 ml oder 0,12 g entsprechend 5,6 eq Et₃SiCl
in 0,8 ml Lösungsmittel CD₂Cl₂ zur Reaktion gebracht, wodurch eine gelbe Lösung erhalten wurde.

Das Lösungsmittel wurde bei Umgebungsdruck entfernt.
Durch anschließende Extraktion mit 3 x 3 ml siedendem n-Hexan, Entfernen des Lösungsmittels und des Et₃SiCl erhielt man 0,08 g oder 0,14 mmol entsprechend einem Anteil von 97 % Neopentatetrelan (**C**) mit E=Ge, E'=Si, und R=Et als hellgelben Feststoff.

Das ²⁹Si NMR Spektrum dieses Beispiels ist in **Abb. 4** dargestellt.

Die Ergebnisse einer ¹H, ¹³C und ²⁹Si NMR-spektroskopischen Untersuchung:
**²⁹Si NMR (99,4 MHz, CD₂Cl₂):** δ = 21,4 ppm (m, (Cl₃Si)₃Ge**Si**CH₂CH₃), 10,7 ppm (s,
   (Cl₃**Si**)₃GeSiCH₂CH₃).
**¹H NMR** (500,2 MHz, CD₂Cl₂**)**: δ = 1,14 ppm (m, (Cl₃Si)₃GeSiC**H**₂C**H**₃);
**¹³C{¹H} NMR** (125,8 MHz, CD₂Cl₂**)**: δ = 8,4 ((Cl₃Si)₃GeSiCH₂**C**H₃), 6,5 ppm ((Cl₃Si)₃GeSi**C**H₂CH₃);
**¹H/¹³C HMBC NMR** (500,2/125,8 MHz, CD₂Cl₂**)**: δ= 1,14/8,4, 1,14/6,5 ppm;
**¹H/²⁹Si HMBC NMR** (500,2/99,4 MHz, CD₂Cl₂**)**: δ = 1,14/21,4 ppm.

### Beispiel 5: Herstellung von Neopentatetrelan (C) mit E=Ge, E'=C, und R=Ph.

In einem abgeschmolzenem NMR-Rohr wurden 0,080 g oder 0,111 mmol entsprechend 1,0 eq [*n*Bu₄N][(Cl₃Si)₃Ge],
0,015 g oder 0,112 mmol entsprechend 1,0 eq AlCl₃ und
0,031 g oder 0,111 mmol entsprechend 1,0 eq Ph₃CCl
in 0,7 ml Lösungsmittel CD₂Cl₂ zur Reaktion gebracht, wodurch eine gelbe Lösung mit gelbem Feststoff erhalten wurde.

Das Lösungsmittel wurde bei Umgebungsdruck entfernt.
Durch Extraktion mit 3 x 3 ml siedendem n-Hexan und anschließender Kristallisation wurde Neopentatetrelan (**C**) mit E=Ge, E'=C, und R=Ph in Form gelber Kristalle erhalten.

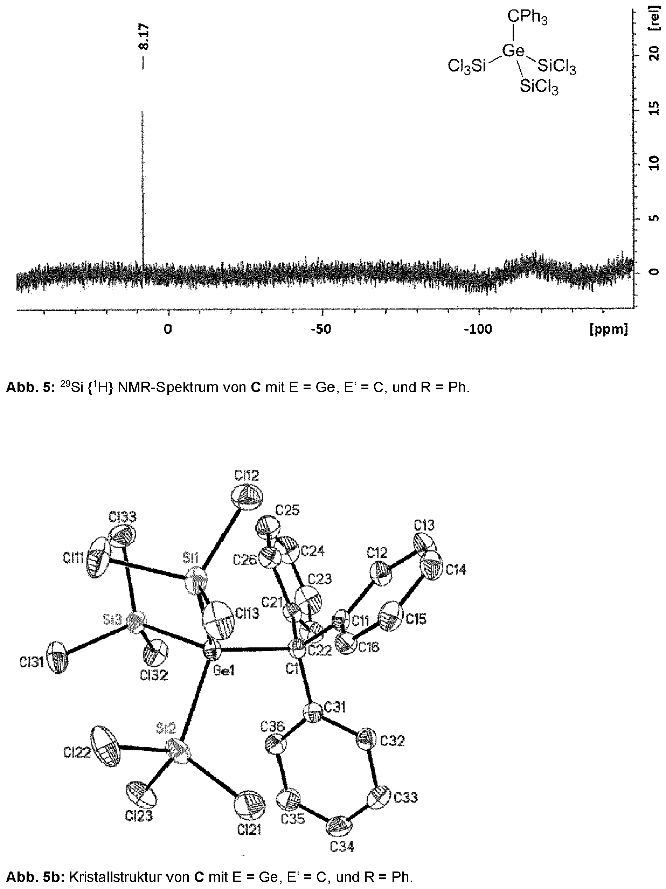

Das ²⁹Si {¹H} NMR Spektrum dieses Beispiels ist in **Abb. 5** dargestellt. Die **Abb. 5b** zeigt die Kristallstruktur dieses Neopentatetrelans.

Die Ergebnisse einer ¹H, ¹³C und ²⁹Si NMR-spektroskopischen Untersuchung:
**²⁹Si NMR (99,4 MHz, CD₂Cl₂):** δ = 8,2 ppm.
**¹H NMR** (500,2 MHz, CD₂Cl₂**)**: δ = 7,38 - 7,28 ppm (m, (Cl₃Si)₃GeC**Ph**₃),
   δ = 7,16 - 7,12 ppm (m, 2H, (Cl₃Si)₃GeC**Ph**₃);
**¹³C{¹H} NMR** (125,8 MHz, CD₂Cl₂**)**: δ = 144,3 ((Cl₃Si)₃GeC**Ph**₃(*-ipso*)),
   131,4 ((Cl₃Si)₃GeC**Ph**₃(-*ortho*)), 129,8 ((Cl₃Si)₃GeC**Ph**₃(*-para*)),
   128,2 ((Cl₃Si)₃GeC**Ph₃**(*-metha*)), 70,3 ppm ((Cl₃Si)₃Ge**C**Ph₃);
**¹H/¹³C HMBC NMR** (500,2/125,8 MHz, CD₂Cl₂**)**:
   δ = 7,38 - 7,28/144,3, 7,38 - 7,28/131,4, 7,38 - 7,28/129,8, 7,38 - 7,28/128,2, 7,16 - 7,12/ 7,16 - 7,12/144,3, 7,16 - 7,12/131,4, 7,16 - 7,12/129,8,
   7,16 - 7,12/128,2, 7,16 - 7,12/70,3 ppm;
**¹H/²⁹Si HMBC NMR** (500,2/99,4 MHz, CD₂Cl₂**)**: δ = 7,16 - 7,12/8,2 ppm.

### Beispiel 6: Herstellung von Neopentatetrelan (C) mit E=Ge, E'=Si, und R=Ph.

In einem abgeschmolzenem NMR-Rohr wurden 0,100 g oder 0,139 mmol entsprechend 1,0 eq [*n*Bu₄N][(Cl₃Si)₃Ge],
0,019 g oder 0,142 mmol entsprechend 1,0 eq AlCl₃ und
0,041 g oder 0,139 mmol entsprechend 1,0 eq Ph₃SiCl
in 0,8 ml Lösungsmittel CD₂Cl₂ zur Reaktion gebracht, wodurch eine gelbe Lösung mit gelbem Feststoff erhalten wurde.

Das Lösungsmittel wurde bei Umgebungsdruck entfernt.
Durch Extraktion mit 3 x 3 ml siedendem *n*-Hexan und anschließender Kristallisation wurde Neopentatetrelan (**C**) mit E=Ge, E'=Si, und R=Ph in Form gelber Kristalle isoliert.

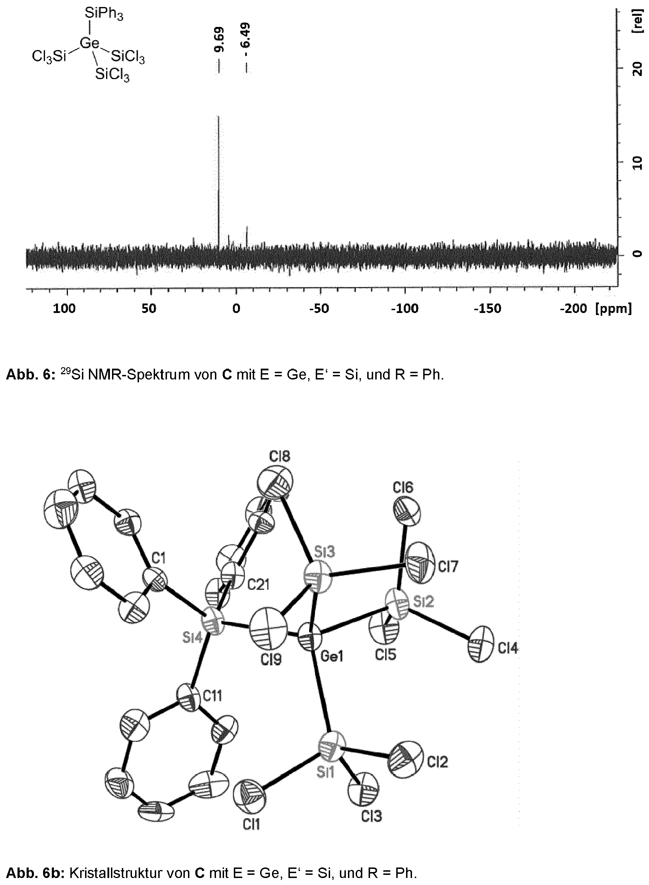

Das ²⁹Si NMR Spektrum dieses Beispiels ist in **Abb. 6** dargestellt. Die **Abb. 6b** zeigt die Kristallstruktur dieses Neopentatetrelans.

Die Ergebnisse einer ¹³C und ²⁹Si NMR-spektroskopischen Untersuchung:
**²⁹Si NMR (99,4 MHz, CD₂Cl₂):** δ = 9,7 ppm (s, (Cl₃**Si**)₃GeSiPh₃),
   -6,5 ppm (m, (Cl₃Si)₃Ge**Si**Ph₃).
**¹³C{¹H} NMR** (125,8 MHz, CD₂Cl₂**)**: δ = 137,1, 134,5, 131,7, 129,2 ppm.

### Beispiel 7: Herstellung von Neopentatetrelan (C) mit E=E'=Ge und R=Ph.

In einem abgeschmolzenem NMR-Rohr wurden 0,081 g oder 0,113 mmol entsprechend 1,0 eq [*n*Bu₄N][(Cl₃Si)₃Ge],
0,015 g oder 0,112 mmol entsprechend 1,0 eq AlCl₃ und
0,038 g oder 0,112 mmol entsprechend 1,0 eq Ph₃GeCl
in 0,7 ml Lösungsmittel CD₂Cl₂ zur Reaktion gebracht, wodurch eine hellgelbe Lösung erhalten wurde.

Das Lösungsmittel wurde bei Umgebungsdruck entfernt.
Durch Extraktion mit 3 x 4 ml *n*-Hexan und anschließender Kristallisation wurde Neopentatetrelan (**C**) mit E=E'=Ge und R=Ph in Form hellgelber Kristalle isoliert.

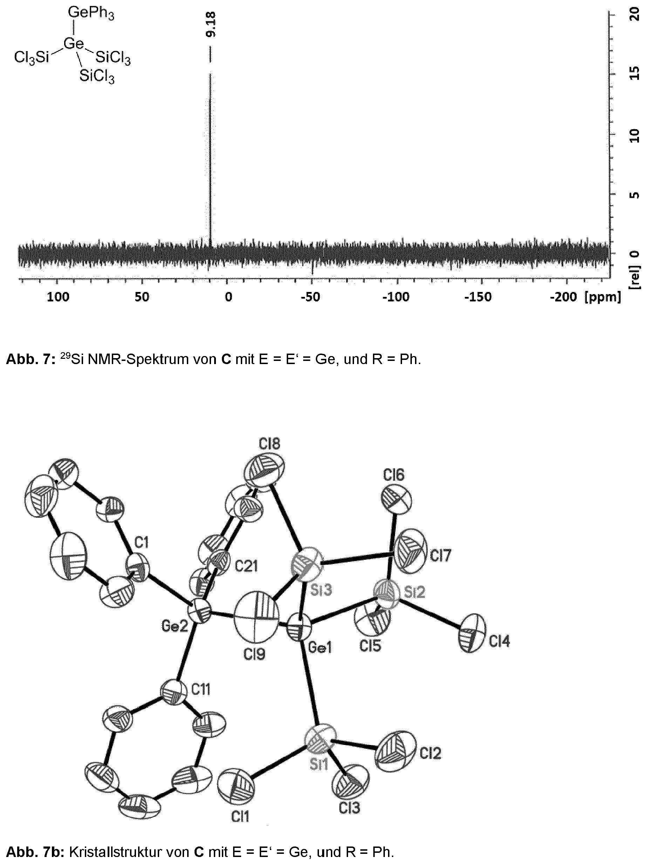

Das ²⁹Si NMR Spektrum dieses Beispiels ist in **Abb. 7** dargestellt. Die **Abb. 7b** zeigt die Kristallstruktur dieses Neopentatetrelans.

Die Ergebnisse einer ¹H, ¹³C und ²⁹Si NMR-spektroskopischen Untersuchung:
**²⁹Si NMR (99,4 MHz, CD₂Cl₂):** δ = 9,2 ppm (s, (Cl₃**Si**)₃GeGePh₃).
**¹H NMR** (500,2 MHz, CD₂Cl₂**)**: δ = 7,65 - 7,64 ppm (m, 2H),
   7,54 - 7,50 ppm (m, 1H), 7,49 - 7,46 ppm (m, 2H);
**¹³C{¹H} NMR** (125,8 MHz, CD₂Cl₂**)**: δ = 136,0, 133,1, 130,9, 129,4 ppm.

## Patentansprüche

1. Neopentatetrelan der allgemeinen Formel **C** 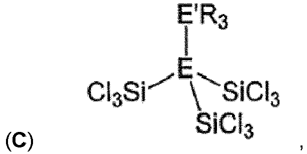 wobei paarweise unabhängig voneinander E für Si oder Ge, E' für C, Si oder Ge, und R für Cl, Me, Et oder Ph stehen.

2. Verfahren zur Herstellung eines Neopentatetrelans **C** nach Anspruch 1 indem man
(a) ein Salz [X₄N]- oder [X₄P]-Tris(trichlorsilyl)tetrelid, wobei der Rest X ausgewählt ist aus Me, Et, *i*Pr, *n*Bu oder Ph,
das Tris(trichlorsilyl)tetrelid mit der allgemeinen Formel **A⁻** 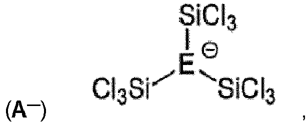 mit E = Si oder Ge, in einem Lösungsmittel löst, und anschließend
entweder die Schritte b und c, oder den Schritt d ausführt:
(b) das nach Schritt a gelöste Tris(trichlorsilyl)tetrelid in Gegenwart einer Lewis-Säure umsetzen,
wobei ein Disilen oder Germasilen mit der allgemeinen Formel **B** 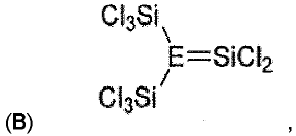 mit E = Si oder Ge erhalten wird, und
(c) das Disilen oder Germasilen **B** mit einem Tetrelchlorid R₃E'-Cl bei einer Temperatur von - 80 °C bis 40 °C umsetzen,
mit E' = C, Si oder Ge, und mit R = Cl, Me, Et oder Ph,
wobei das Neopentatetrelan **C** erhalten wird,
oder
(d) das nach Schritt a gelöste Tris(trichlorsilyl)tetrelid bei einer Temperatur von - 80 °C bis 40 °C in eine Suspension einbringen, die
eine Lewis-Säure, ein Tetrelchlorid R₃E'-Cl
mit E' = C, Si oder Ge, und mit R = Cl, Me, Et oder Ph,
und ein Lösungsmittel enthält,
wobei das Neopentatetrelan **C** erhalten wird.

3. Verfahren nach Anspruch 2, wobei die Schritte b und c, oder der Schritt d bei Raumtemperatur durchgeführt werden oder wird.

4. Verfahren nach einem der Ansprüche 2 oder 3, **dadurch gekennzeichnet, dass** man im Schritt a und/oder im Schritt d als Lösungsmittel Dichlormethan, Benzol, C₆D₆, oder CD₂Cl₂ einsetzt.

5. Verfahren nach einem der Ansprüche 2 bis 4, **dadurch gekennzeichnet, dass** man im Schritt a X = *n*Bu, einsetzt.

6. Verfahren nach einem der Ansprüche 2 bis 5, **dadurch gekennzeichnet, dass** im Schritt b oder d als Lewis-Säure AlCl₃ eingesetzt wird.

7. Verfahren nach einem der Ansprüche 2 bis 6, **dadurch gekennzeichnet, dass** man den Schritt d oder die Schritte b und c unter Durchmischung, bevorzugt unter Rühren, und über eine Dauer von insgesamt 1 bis 24 Stunden, vorzugsweise während insgesamt 12 h, und
vorzugsweise unter Schutzgas, bevorzugt unter Stickstoff oder Argon, durchführt, und anschließend
das Lösungsmittel entfernt, vorzugsweise in Sauerstoff freier trockener Umgebung, besonders bevorzugt in einer isolierten Umgebung,
weiterhin bevorzugt unter Normaldruck oder Druck im Bereich von 1 bis 500 hPa, besonders bevorzugt unter Normaldruck,
und das gebildete Neopentatetrelan **C** extrahiert, vorzugsweise mit *n*-Hexan, besonders bevorzugt mit siedendem *n*-Hexan.

8. Verbindungen der allgemeinen Formel **B,** hergestellt nach einem Verfahren gemäß einem der Ansprüche 2 bis 6, wobei im Schritt b des Verfahrens zusätzlich Anthracen oder ein Anthracen-Derivat eingesetzt wird und das Verfahren nach Schritt b und vor Schritt c abgebrochen wird.

9. Verwendung eines Neopentatetrelanes **C** nach Anspruch 1 oder hergestellt nach einem der Ansprüche 2 bis 7 für die Erzeugung von GeSi-Schichten.
